# EUROPÄISCHE PATENTSCHRIFT

(11) **EP 0 647 492 B1**
(45) Veröffentlichungstag und Bekanntmachung des Hinweises auf die Patenterteilung: **15.07.1998**
(21) Anmeldenummer: 94110623.9
(22) Anmeldetag: 07.07.1994
(51) Int. Cl.: B22F 5/10, B22F 3/22, B22F 3/20, B28B 1/24, B29C 45/14

(54) **Verfahren zur Herstellung von ineinandergreifenden Teilen**
Process for preparing nestable parts
Procédé de préparation de parties emboîtées

(30) Priorität: 28.09.1993 DE 4332971
(43) Veröffentlichungstag der Anmeldung: 12.04.1995
(73) Patentinhaber: fischerwerke Artur Fischer GmbH & Co. KG, D-72178 Waldachtal (DE)
(72) Erfinder: Weber, Wilfried, Dipl.-Ing. (FH), D-72296 Schipfloch-Unteriflingen (DE)

(56) Entgegenhaltungen:
- EP-A- 0 448 875
- EP-A- 0 497 682
- US-A- 2 990 292
- US-A- 3 050 813
- DATABASE WPI Section Ch, Week 8649, Derwent Publications Ltd., London, GB; Class M22, AN 86-324741 & SU-A-1 225 690 (AS BELO MACH RELIAB) 23. April 1986

## Beschreibung

Die Erfindung betrifft ein Verfahren zur Herstellung von ineinandergreifenden Teilen sowohl im Pulverspritzguß als auch im Extrusionsverfahren gemäß Oberbegriff der Ansprüche 1 und 4.

Ineinandergreifende feuerfeste Teilen sind bereits aus US-A-3050813 bekannt.

Das Verfahren zur Herstellung von Teilen im Pulverspritzguß sowie auch im Extrusionsverfahren ist bekannt, wie z.B. in EP-A-497682 und SU-A-1225690. Während letzteres nur in Verbindung mit Metallpulver zur Extrusion von Metallprofilen angewandt wird, wird der Pulverspritzguß sowohl zur Herstellung von Metall- als auch Keramikteilen verwendet. Der Verfahrensablauf ist weitgehend identisch. So wird beispielsweise das Metallpulver mit den gewünschten Legierungszusätzen - ebenfalls in Pulverform - gemischt. In einem beheizten Kneter wird diese Pulvermischung mit Hilfe polymerer organischer Bindemittel (Wachse, Kunststoffe) plastifiziert und anschließend in der Weise granuliert, daß eine Verarbeitung auf herkömmlichen Spritzgußmaschinen möglich ist. Als Form dient ein Spritzgußwerkzeug mit ähnlichem Aufbau wie ein Kunststoff-Spritzgußwerkzeug.

Die spritzgegossenen Formkörper (Grünlinge) werden zum Entbindern und Ausscheiden des Bindemittels in einen Entbinderungsofen gesetzt. In dem Entbinderungsprozeß zerbrechen die Molekülketten des Bindemittels durch thermische oder chemische Zersetzung. Gleichzeitig findet eine Vorsinterung der metallischen Formkörper statt, die diesen eine ausreichende Stabilität verleiht.

Beim Sintern, das in Vakuum oder in Schutzgas durchgeführt werden kann, erhalten die metallischen Spritzgußteile ihre endgültigen Werkstoffeigenschaften. Die Dichte nimmt dabei stark zu und die Abmessungen schrumpfen um bis zu 20 %. Aufgrund der hohen Schwindung ist es bislang nicht möglich, ineinandergreifende Teile im Pulverspritzguß bzw. Zweischichtmetallprofile in einem kontinuierlichen Extrusionsverfahren herzustellen.

Der Erfindung liegt die Aufgabe zugrunde, ein Verfahren zu schaffen, mit dem ineinandergreifende Teile im Pulverspritzguß bzw. Zweischichtmetallprofile in einem kontinuierlichen Metallpulver-Extrusionsverfahren herstellbar sind.

Die Lösung dieser Aufgabe wird durch die Merkmale der Ansprüche 1 und 4 erreicht. Auf das in der Regel innen liegende Teil, das somit als Kern dient, wird im Spritzgußverfahren eine aus Kunststoff bestehende Trennschicht als Kunststoffteil aufgespritzt. Die Außenkontur des Kunststoffteiles bildet anschließend die Innenkontur des im Pulverspritzgußverfahren aufgebrachten weiteren Teils. Die Dicke der Trennschicht und damit die Wandungsstärke des Kunststoffteiles entspricht mindestens dem Schwund des im Pulverspritzguß aufgebrachten weiteren Teils nach dem Entbinderungs-und Sinterprozeß. Entspricht die Dicke der Trennschicht exakt dem Schwund, ergibt sich nach Abschluß des Verfahrens ein Klemmsitz, bei über dem Schwundmaß liegender Dicke der Trennschicht ein Spiel zwischen den ineinandergreifenden Teilen. Das als Trennschicht wirkende Kunststoffteil wird beim Entbinderungsprozeß ausgeschmolzen oder chemisch zusammen mit dem in der Pulvermischung enthaltenen Bindemittel ausgeschieden.

Das Verfahren ist sowohl für Keramiken (Ceramic Injection Molding = CIM) als auch für Metalle (Metal Injection Molding = MIM) geeignet. In beiden Fällen kann zur Entbinderung ein Katalysator verwendet werden, der die Depolymerisation des als Bindemittel eingesetzten Kunststoffes beschleunigt. Das erfindungsgemäße Verfahren ermöglicht somit die formschlüssige und ineinandergreifende Verbindung zweier Teile, von denen wenigstens ein Teil im Pulverspritzguß hergestellt ist. Damit ergibt sich beispielsweise die Möglichkeit, auf einem Stahlbolzen mit einem abgesetzten Abschnitt, an dessen Ende sich ein Spreizkonus anschließt, eine axial auf diesem Abschnitt bewegbare Metallspreizhülse im Pulverspritzgußverfahren aufzubringen. Bei diesem Beispiel kann der Spreizbolzen in herkömmlicher Weise im Dreh- oder Kaltumformverfahren hergestellt sein und als Einlegeteil in das Spritzgußwerkzeug eingelegt werden.

Es ist jedoch auch möglich, beide ineinandergreifenden Teile im Pulverspritzgußverfahren herzustellen. In diesem Fall wird nach dem Abspritzen des ersten Teils die Trennschicht aufgespritzt und beide Teile gemeinsam in ein oder zwei Stufen entbindert und gesintert. Die Durchführung des Entbinderungs- und Sinterprozesses in zwei Stufen empfiehlt sich vor allem dann, wenn die beiden Teile eine unterschiedliche Materialzusammensetzung und/oder unterschiedliches Bindemittel aufweisen.

Zur Reduzierung der Taktzeit bei der Herstellung der ineinandergreifenden Teile und Aufbringung der Trennschicht werden zweckmäßigerweise Zweikomponenten- bzw. Dreikomponenten-Spritzgußmaschinen mit entsprechenden Spritzgußwerkzeugen verwendet.

Die Herstellung von Mehrschicht-Metallprofilen, bei denen zumindest eine Schicht im Metallpulver-Extrusionsverfahren hergestellt ist, wird ebenfalls auf das innenliegende Profilteil eine Trennschicht aus Kunststoff in einem kontinuierlichen Extrusionsverfahren aufgebracht. Die äußere Metallbeschichtung erfolgt dann in Metallpulver-Extrusion. Auch bei diesem kontinuierlichen Herstellverfahren entspricht die Dicke der Trennschicht mindestens dem Schwund der äußeren Metallschicht. Die Trennschicht wird nach dem Spritzvorgang beim Entbinderungsprozeß in einem Durchlaufofen ausgeschmolzen oder chemisch ausgeschieden. Mit diesem Verfahren können beispielsweise in herkömmlichem Verfahren hergestellte Metallprofilteile nachträglich mit einer weiteren Metallschicht überzogen werden. Wird das innere Metallprofilteil im Metallpulver-Extrusionsverfahren hergestellt, werden sowohl die Trennschicht als auch die äußere Metallschicht mit zusätzlichen Spritzzylindern in CO-Extrusion kontinuierlich aufgebracht.

Die Erfindung wird nachfolgend anhand der in der Zeichnung dargestellten Ausführungsbeispiele näher erläutert.

Es zeigen:
- Figur 1: eine Prinzipdarstellung des Formnestes zum Einspritzen der Trennschicht auf den Metallbolzen als Einlegeteil,
- Figur 2: das Formnest zum Aufspritzen des zweiten Metallteiles auf die Trennschicht,
- Figur 3: der Metallbolzen mit aufgebrachter Spreizhülse nach dem Entbinderungs-und Sinterprozeß und
- Figur 4: als Prinzipskizze die Herstellung eines Zweischichtmetallrohres im CO-Extrusionsverfahren.

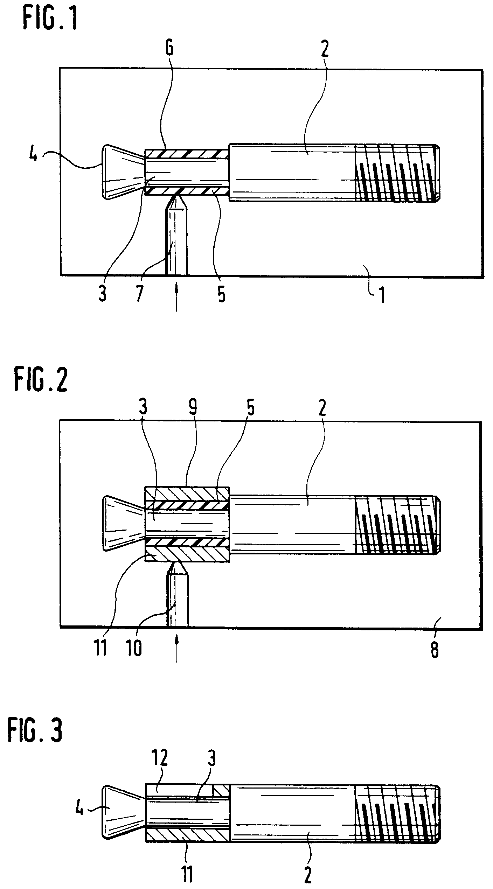

In den Figuren 1, 2 und 3 sind schematisch in Form von Prinzipskizzen die Verfahrensstufen zur Herstellung zweier ineinandergreifender Teile anhand eines Spreizankers dargestellt. Der in das Formnest 1 eingelegte, in herkömmlicher Weise oder im Metall-Spritzgußverfahren hergestellte Metallbolzen 2 weist einen reduzierten Abschnitt 3 auf, an den sich ein Spreizkonus 4 anschließt. Zum Aufbringen der aus Kunststoff bestehenden Trennschicht 5 auf den reduzierten Abschnitt 3 weist das Formnest einen den reduzierten Abschnitt umgebenden Hohlraum 6 auf. Dieser Hohlraum wird im ersten Spritzgang über den Spritzkanal 7 ausgefüllt. Nach dem Einlegen des mit der Trennschicht 5 versehenen Bolzens 2 in die Spritzform 8 (siehe Figur 2) wird in den Hohlraum 9 die mit dem Bindemittel vermengte Pulvermischung durch den Spritzkanal 10 eingespritzt. Dadurch ergibt sich eine formschlüssige Anordnung des als Spreizhülse 11 ausgebildeten weiteren Teils auf dem reduzierten Abschnitt 3 des Bolzens 2. Anschließend erfolgt der Entbinderungs- und Sinterprozeß, bei dem sowohl das Bindemittel als auch die Trennschicht ausgeschieden werden. Der durch die Dicke der Trennschicht 5 geschaffene Freiraum ermöglicht die beim Entbindern und Sintern entstehende Schwindung der Spreizhülse 11. Die Dicke der Trennschicht 5 ist im dargestellten Ausführungsbeispiel so bemessen, daß zwischen der Spreizhülse 11 und dem reduzierten Abschnitt 3 des Bolzens 1 ein die axiale Verschiebung ermöglichendes Spiel verbleibt. Die Hülse 11 kann mit ein oder mehreren Längsschlitzen 12 versehen sein, so daß beim Einziehen des Spreizkonusses 4 in die Spreizhülse 11 eine Aufspreizung erfolgt.

Der Bolzen 2 kann ebenfalls im Metallpulverspritzgußverfahren (MIM-Verfahren) hergestellt werden. In diesem Fall wird in einem vorgeschalteten Spritzgußverfahren in einem dritten Formnest der Bolzen 2 - wie bei der Spreizhülse 11 beschrieben - hergestellt. Danach folgen die in Figur 1 und Figur 2 dargestellten weiteren Verfahrensstufen.

In diesem Fall kann die Dicke der Trennschicht 5 geringer gehalten werden, da auch beim Entbinderungs- und Sinterprozeß der im MIM-Verfahren hergestellte Bolzen 2 ebenfalls schwindet. Um eine kostengünstige Fertigung zu erreichen ist es zweckmäßig, für das Herstellverfahren Zweikomponenten- bzw. Dreikomponenten-Spritzgußmaschinen mit entsprechenden Spritzgußwerkzeugen für Mehrkomponenten-Spritzguß zu verwenden.

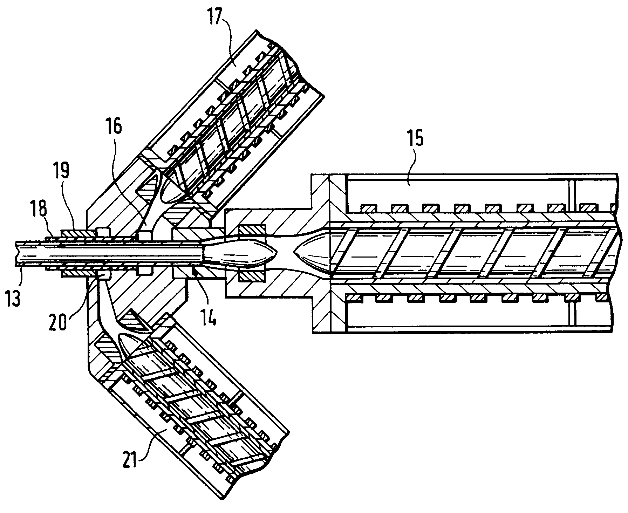

In Figur 4 ist schematisch die Herstellung eines Zweischicht-Metallprofiles auf einer CO-Extrusionsspritzmaschine dargestellt. Das Innenrohr 13 wird mit der Spritzdüse 14 im Metallpulver-Extrusionsverfahren hergestellt. Die Beschickung mit dem Metallpulver und Bindemittel erfolgt über den Spritzzylinder 15. In einer weiteren Stufe wird über die Düse 16 und den Spritzzylinder 17 auf das innenliegende Rohr 13 die aus Kunststoff bestehende Trennschicht 18 aufgebracht. Die äußere Metallschicht 19 des Profilteiles wird im Metallpulverspritzverfahren über die Düse 20 und Spritzzylinder 21 aufgespritzt. Das im CO-Extrusionsverfahren hergestellte Profilteil durchläuft anschließend einen Entbinderungs- und Sinterofen, in denen das Bindemittel und die Trennschicht ausgeschieden werden. Die Trennschicht ermöglicht die Herstellung von Zweischicht-Profilteilen in einem kontinuierlichen Fertigungsverfahren, bei dem die Schichten jeweils unterschiedliche Materialzusammensetzungen und Schwindmaße aufweisen können.

## Patentansprüche

1. Verfahren zur Herstellung von ineinandergreifenden Metal- als auch Keramikteilen, wobei wenigstens ein Teil im Pulverspritzguß hergestellt ist, **dadurch gekennzeichnet**, daß auf ein Teil (2) im Spritzgußverfahren eine Trennschicht (5) aus Kunststoff aufgebracht wird, daß anschließend auf die Trennschicht (5) das weitere Teil (11) im Pulverspritzguß aufgespritzt wird, wobei die Dicke der Trennschicht mindestens dem Schwund des weiteren Teiles (11) entspricht, und daß nach dem Spritzvorgang beim Entbinderungs- und Sinterprozeß die Trennschicht und das Bindemittel ausgeschieden werden.

2. Verfahren nach Anspruch 1, **dadurch gekennzeichnet**, daß beide Teile (2, 11) im Pulverspritzguß hergestellt werden, wobei nach dem Abspritzen des ersten Teils (2) die Trennschicht (5) aufgespritzt wird, und beide ineinandergreifenden Teile (2, 11) gemeinsam entbindert und gesintert werden.

3. Verfahren nach Anspruch 1 oder 2, **dadurch gekennzeichnet**, daß zur Herstellung der ineinandergreifenden Teile (2, 11) und Aufbringung der Trennschicht (5) Zweikomponenten- bzw. Dreikomponenten-Spritzgußmaschinen mit entsprechenden Spritzgußwerkzeugen verwendet werden.

4. Verfahren zur Herstellung von Zweischicht-Metallprofilteilen, wobei wenigstens eine der beiden Metallschichten im Metallpulver-Extrusionsverfahren hergestellt wird, **dadurch gekennzeichnet**, daß auf das innenliegende Profilteil (13) eine Trennschicht (18) aus Kunststoff im Extrusionsverfahren und auf die Trennschicht (18) die äußere Metallschicht (19) des Profilteiles in einem Metallpulver-Extrusionsverfahren aufgebracht werden, wobei die Dicke der Trennschicht (18) mindestens dem Schwund der äußeren Metallschicht (19) entspricht, und daß nach dem Extrusionsverfahren in einem kontinuierlichen Entbinderungs-und Sinterprozeß die Trennschicht (18) und das Bindemittel ausgeschieden werden.

5. Verfahren nach Anspruch 4, **dadurch gekennzeichnet**, daß das innenliegende Profilteil (13) im Metallpulver-Extrusionsverfahren hergestellt wird und die Trennschicht (18) sowie die äußere Metallschicht (19) in CO-Extrusion mit zwei weiteren Spritzzylindern (17, 21) kontinuierlich aufgebracht werden.

## Claims

1. A method for the manufacture of interlocking metal and also ceramic parts, in which at least one part is manufactured by powder injection moulding, characterized in that a separation layer (5) of plastics material is applied to a part (2) by injection moulding, the additional part (11) is subsequently injected onto the separation layer (5) by powder injection moulding, the thickness of the separation layer corresponding at least to the contraction of the additional part (11), and after the injection operation the separation layer and the binder are eliminated during the binder-removing and sintering process.

2. A method according to claim 1, characterized in that both parts (2, 11) are manufactured by powder injection moulding, the separation layer (5) being injected on after injection moulding of the first part (2), and both interlocking parts (2, 11) are jointly subjected to binder removal and sintering.

3. A method according to claim 1 or 2, characterized in that, to manufacture the interlocking parts (2, 11) and apply the separation layer (5), two-component or three-component injection moulding machines with corresponding injection moulding tools are used.

4. A method for the manufacture of double-layer shaped metal parts, in which at least one of the two metal layers is manufactured by a powdered metal extrusion method, characterized in that a separation layer (18) of plastics material is applied by extrusion to the inner shaped part (13) and the outer metal layer (19) of the shaped part is applied to the separation layer (18) in a powdered metal extrusion process, the thickness of the separation layer (18) corresponding at least to the contraction of the outer metal layer (19), and in that after the extrusion process the separation layer (18) and the binder are eliminated in a continuous binder-removing and sintering process.

5. A method according to claim 4, characterized in that the inner shaped part (13) is manufactured by the powdered metal extrusion process and the separation layer (18) and also the outer metal layer (19) are applied continuously in CO-extrusion using two additional injection cylinders (17, 21).

## Revendications

1. Procédé de fabrication de parties tant métalliques que céramiques pénétrant les unes dans les autres, au moins une partie étant produite par coulée par injection d'une poudre, caractérisé par le fait qu'une couche séparatrice (5) en matière plastique est mise en place sur une partie (2), par le procédé de coulée par injection ; par le fait que, dans l'enchaînement, l'autre partie (11) est injectée sur la couche séparatrice (5) par coulée par injection d'une poudre, l'épaisseur de la couche séparatrice correspondant au moins au retrait de l'autre partie (11) ; et par le fait que la couche séparatrice et le liant sont séparés à l'issue de l'opération d'injection, au cours du processus de dissociation et de frittage.

2. Procédé selon la revendication 1, caractérisé par le fait que les deux parties (2, 11) sont produites par coulée par injection d'une poudre, la couche séparatrice (5) étant injectée après l'injection de la première partie (2), et les deux parties (2, 11) pénétrant l'une dans l'autre étant conjointement débarrassées du liant, et frittées.

3. Procédé selon la revendication 1 ou 2, caractérisé par le fait que des machines de coulée par injection à deux composants ou à trois composants, équipées d'outils correspondants de coulée par injection, sont utilisées pour la fabrication des parties (2, 11) pénétrant l'une dans l'autre, et pour la mise en place de la couche séparatrice (5).

4. Procédé de fabrication de pièces profilées métalliques à deux couches, au moins l'une des deux couches métalliques étant produite par le procédé d'extrusion d'une poudre métallique, caractérisé par le fait qu'une couche séparatrice (18) en matière plastique est mise en place, par le procédé d'extrusion, sur la pièce profilée (13) située à l'intérieur, puis la couche métallique extérieure (19) de la pièce profilée est mise en place sur la couche séparatrice (18) par un procédé d'extrusion d'une poudre métallique, l'épaisseur de la couche séparatrice (18) correspondant au moins au retrait de la couche métallique extérieure (19) ; et par le fait que la couche séparatrice (18) et le liant sont séparés après le procédé d'extrusion, en un processus continu de dissociation et de frittage.

5. Procédé selon la revendication 4, caractérisé par le fait que la pièce profilée (13) située à l'intérieur est produite par le procédé d'extrusion d'une poudre métallique et la couche séparatrice (18), ainsi que la couche métallique extérieure (19), sont mises en place en continu par CO-extrusion, à l'aide de deux autres cylindres d'injection (17, 21).
